**Europäisches Patentamt**

**European Patent Office**

**Office européen des brevets**

(11) Veröffentlichungsnummer: **0 362 428 B1**

(12) **EUROPÄISCHE PATENTSCHRIFT**

(45) Veröffentlichungstag der Patentschrift: **23.12.92**

(21) Anmeldenummer: **88116520.3**

(22) Anmeldetag: **06.10.88**

(51) Int. Cl.⁵: **C01B 17/90**, C01G 23/053

(54) **Verfahren und Vorrichtung zur Aufarbeitung einer Eisen(II) sulfat enthaltenden Schwefelsäurelösung.**

(43) Veröffentlichungstag der Anmeldung:
**11.04.90 Patentblatt 90/15**

(45) Bekanntmachung des Hinweises auf die Patenterteilung:
**23.12.92 Patentblatt 92/52**

(84) Benannte Vertragsstaaten:
**BE DE ES FR GB IT NL**

(56) Entgegenhaltungen:
**EP-A- 0 133 505**
**EP-A- 0 194 544**
**DE-A- 2 618 122**

(73) Patentinhaber: **KRONOS TITAN-Gesellschaft mbH**
**Peschstrasse 5 Postfach 10 07 20**
**W-5090 Leverkusen 1(DE)**

(72) Erfinder: **Steinhausen, Helmut, Dr.**
**Carl-Leverkus-Strasse 8**
**W-5068 Odenthal(DE)**

**Beschreibung**

Die Erfindung betrifft ein Verfahren zur Aufarbeitung einer verdünnten Schwefelsäurelösung, die - in Lösung - Eisen(II)-sulfat oder ein Gemisch von Metallsulfaten enthält, das vorwiegend aus Eisen(II)-sulfat besteht, wobei man die Schwefelsäurelösung unter Bildung einer Metallsulfat-Schwefelsäure-Suspension bis zu einem Gehalt von 40-85 Gew. % $H_2SO_4$ bezogen auf den Flüssiganteil, konzentriert, und danach die in der Suspension vorhandenen ausgefallenen Metallsulfate abtrennt,
und eine Vorrichtung zur Durchführung eines solchen Verfahrens.

Es sind bereits viele Varianten des betreffenden Verfahrens beschrieben. Bei einigen chemischen Prozessen fallen nämlich als Nebenprodukt große Mengen verdünnter Schwefelsäure an, in der verschiedene Metallsulfate gelöst sind. Früher wurden diese Schwefelsäurelösungen als Abfall angesehen und zur Entsorgung in Gewässer eingebracht. Heute wird dies aus Gründen des Umweltschutzes nicht mehr durchgeführt, und man versucht, die schwefelsauren Abfall-Lösungen so aufzuarbeiten, daß der in ihnen enthaltene $H_2SO_4$-Anteil wieder für chemische Prozesse verwendet werden kann. Dies setzt in der Regel eine Konzentrierung der verdünnten Schwefelsäurelösungen auf einen Gehalt von über 40 Gew. % $H_2SO_4$ voraus. Bei dieser Konzentrierung fällt der überwiegende Teil der in der Schwefelsäure gelösten Metallsulfate aus, im allgemeinen in Form von kristallwasserarmen Modifikationen.

Eisen(II)-sulfat kristallisiert hier beispielsweise als Monohydrat aus.

Für viele Verwendungszwecke der rekonzentrierten Schwefelsäure müssen diese Metallsulfate, die auch als "Filtersalz" bezeichnet werden, aus der Säure entfernt werden. Angesichts der großen Mengen verdünnter Schwefelsäuren, die in der Industrie auf diese Weise verarbeitet werden, ist man bestrebt, daß dem entfernten Filtersalz nur noch wenig der nun wieder verwendbaren - daher wertvollen - rekonzentrierten Schwefelsäure anhaftet. Ein niedriger Gehalt an freier Schwefelsäure verringert darüberhinaus die Kosten der Filtersalzentsorgung, da die anhaftende Schwefelsäure entweder vor einer Deponielagerung des Salzes neutralisiert werden muß oder bei thermischer Spaltung des Filtersalzes zur $SO_2$-Gewinnung und nachfolgender Schwefelsäuredarstellung relativ viel Energie unnötig verbraucht. Die Abtrennung des Filtersalzes muß sich jedoch zuverlässig im Dauerbetrieb durchführen lassen.

Daran scheitert aber oftmals der großtechnische Einsatz der eingangs beschriebenen Verfahren zur Rekonzentrierung von verdünnten, metallsulfathaltigen Schwefelsäurelösungen. Da in vielen Betrieben (z. B. in Titandioxidfabriken) laufend riesige Mengen verdünnter Schwefelsäurelösung anfallen, die verarbeitet werden müssen, kann man sich nämlich keine längeren Ausfallzeiten oder Störungen im Aufarbeitungsverfahren leisten, ohne daß aufwendige Lagermöglichkeiten für die Schwefelsäurelösungen geschaffen werden oder die Produktion des Betriebes während der Störungen verringert wird. Besonders wenn die verdünnten Schwefelsäurelösungen große Mengen Eisen(II)-sulfat gelöst enthalten, stellt die Abtrennung des Filtersalzes von der rekonzentrierten Schwefelsäure ein noch immer nicht befriedigend gelöstes Problem dar.

Es ist bereits bekannt, Siebzentrifugen für diese Trennung einzusetzen. Diese Zentrifugen erlauben eine sehr weitgehende Befreiung des Filtersalzes von der anhaftenden Schwefelsäure. (Forschungsber.-Bundesminist. Forsch. Technol., Technol. Forsch. Entwickl. 1984, BMFT-FB-T-84-150). Der Dauerbetrieb der Zentrifugen mit den viskosen, spezifisch schweren Filtersalz-Schwefelsäure-Suspensionen führt jedoch relativ häufig zu mechanischen Beschädigungen der Kunststoffauskleidungen an bestimmten Stellen der Zentrifugentrommeln. Da diese Auskleidungen dem Korrosionsschutz dienen und außerdem die Gefahr von Unwuchten besteht, sind in diesem Fall sofortige Reparaturen nötig, um größere Schäden an den Zentrifugen zu vermeiden. Die Arbeiten an den Zentrifugentrommeln machen aber in der Regel ein neuerliches Auswuchten erforderlich, was besonders bei großen Trommeln nur in wenigen Spezialbetrieben durchgeführt werden kann. Daher sind die geschilderten Reparaturen in der Regel sehr langwierig.

Es ist auch möglich, die beim Konzentrieren entstandene Suspension aus Metallsulfaten und Schwefelsäure mit Filtern zu trennen. Dabei wurde wegen der hohen Viskositäten der 40-85 %igen rekonzentrierten Schwefelsäurelösungen besonderes Augenmerk auf die Druckfiltration gerichtet. Beispielsweise wird in der EP-A2-133 505 vorgeschlagen, Dünnsäure aus der Titandioxidherstellung, d. h. eine metallsulfathaltige, bis zu 28 %ige Schwefelsäurelösung zu konzentrieren und die erhaltene Suspension aus Metallsulfaten und 62-70 %iger Schwefelsäurelösung mit einem Kammerpreßfilter zu trennen. Danach könne durch Waschung mit weiterer Dünnsäure bzw. Waschsäure aus der $TiO_2$-Herstellung (ca. 8-10 %ige Schwefelsäure) die im Filterkuchen verbliebene 62-70 %ige Säure ausgewaschen werden, um den Schwefelsäure-Gehalt des Filtersalzes auf ein annehmbares Maß zu reduzieren. Dieses Verfahren hat im Hinblick auf einen störungsfreien Dauerbetrieb bei der Verarbeitung großer Mengen von insbesondere Eisen(II)-sulfat enthalteden Schwefelsäurelösungen jedoch beachtliche Nachteile. So ist bei der Verwendung eines Kammerpreßfilters im allgemeinen keine wirksame Waschoperation möglich, da es während Filtration und Waschung häufig zur Bildung von Rissen im Filterkuchen kommt, durch die dann praktisch die gesamte Waschlösung ungenutzt abfließt. Enthält der Filtersalzkuchen Eisen(II)-sulfatmonohydrat, bildet sich beim Kontakt mit Wasser oder Dünnsäure teilweise das Monohydrat zum Heptahydrat um. Diese Umbildung führt zu einem Verfestigen und Zementieren des Filterkuchens, so daß sich dieser nur mehr unvollständig und sehr schwierig aus den Filterkammern entfernen läßt. Außerdem kommt es durch die Bildung von Eisen(II)-sulfat-Heptahydrat während des Waschvorganges oft zu Verstopfungen des Filtertuches, die eine Fortsetzung der Filtersalzabtrennung nicht mehr erlauben, ohne daß das Filtertuch gewechselt bzw. gewaschen wird. Ein weitgehend störungsfreier Verlauf der Waschoperation ist demnach nicht gewährleistet.

In der EP-A2-194 544 ist ein weiteres Verfahren zur Konzentrierung einer verdünnten Schwefelsäurelösung beschrieben, die Eisen(II)-sulfat und andere Metallsulfate enthält. Bei diesem Verfahren wird auf eine Waschung des abfiltrierten Kuchens aus Metallsulfaten gänzlich verzichtet. Ein annehmbarer $H_2SO_4$-Restgehalt des Filtersalzes soll dadurch erreicht werden, daß der Filterkuchen so, wie er bei einer Filtration unter Überdruck gebildet wird, mit Druckluft durchblasen wird, um möglichst viel der ihm anhaftenden rekonzentrierten Schwefelsäurelösung aus seinen Kapillaren und Poren zu vertreiben. Will man auf diese Weise den $H_2SO_4$-Anteil des Filtersalzes um einige %-Punkte unter 12 Gew. % senken, ist die Verwendung von Kerzen- oder Blattfiltern erforderlich, die jedoch eine aufwendige Peripherie benötigen, wenn sie über lange Zeit zuverlässig arbeiten sollen, wie der EP-A2-235 689 zu entnehmen ist. Bei Einsatz einer Filterpresse erreicht man dagegen niedrigere Werte für den $H_2SO_4$-Gehalt des Filtersalzes nicht. Selbst wenn man eine Membranfilterpresse einsetzt und - wie bei diesem Pressentyp möglich - den anfangs während der Druckfiltration aufgebauten Kuchen gegen Ende der Filtration mit Hilfe der elastischen Membran mit hohem Druck z. B. 16 bar oder 8 bar auspreßt, beträgt der $H_2SO_4$-Restgehalt des ausgetragenen Kuchens noch 13,2 Gew. % bzw. 12,3 Gew. %. Ein um 1 Gew. % niedrigerer $H_2SO_4$-Restgehalt im Filtersalz bedeutet jedoch oftmals in der Praxis (z. B. Aufarbeitung der Dünnsäure einer Titandioxidfabrik) schon eine Ersparnis von 500 bis 1000 t 100 %iger Schwefelsäure pro Jahr, so daß Werte für den $H_2SO_4$-Restgehalt von Filtersalz oberhalb 12 Gew. % i.d.R. als zu hoch anzusehen sind. Die hohen Drucke, mit denen die Membran gegen den Filterkuchen gepreßt werden muß, haben außerdem - auch bei Einsatz spezieller Membranmaterialien - einen vorzeitigen Verschleiß der Membranen zur Folge. Darüberhinaus erschwert die starke Kompaktierung des Filterkuchens durch Pressung unter Drucken über 8 bar merklich das Ausblasen der rekonzentrierten Schwefelsäurelösung aus den Kapillarhohlräumen des Filterkuchens, das ohnehin schon sehr schwer zu bewerkstelligen ist, da die aus dem Kuchen zu entfernende Schwefelsäurelösung sehr konzentriert und daher sehr viskos ist.

Aufgabe der vorliegenden Erfindung ist es nun, die geschilderten Nachteile des Standes der Technik zu vermeiden und ein Verfahren der eingangs genannten Art zur Verfügung zu stellen, das in zuverlässiger Weise die Abtrennung des Filtersalzes erlaubt, wobei das abgetrennte Filtersalz einen gleichmäßigen geringen Anteil an freiem $H_2SO_4$ aufweist.

Überraschenderweise wurde nun gefunden, daß es möglich ist, die rekonzentrierte Schwefelsäurelösung, die sich nach der Filtration noch in den Hohlräumen des Filterkuchens aus Eisen(II)-sulfatmonohydrat enthaltendem Filtersalz befindet, auszuwaschen, ohne daß es zum Verfestigen des Filterkuchens und zur Verstopfung des Filtertuches kommt, wenn man als Waschflüssigkeit eine 30 bis 35 Gew. % $H_2SO_4$ enthaltende Schwefelsäurelösung einsetzt.

Gegenstand der Erfindung ist daher ein Verfahren zur Aufarbeitung einer verdünnten Schwefelsäurelösung, die - in Lösung - Eisen(II)-sulfat oder ein Gemisch von Metallsulfaten enthält, das vorwiegend aus Eisen(II)-sulfat besteht, wobei man die Schwefelsäurelösung unter Bildung einer MetallsulfatSchwefelsäure-Suspension bis zu einem Gehalt von 40-85 Gew. % $H_2SO_4$, bezogen auf den Flüssiganteil, konzentriert, und danach die in der Suspension vorhandenen ausgefallenen Metallsulfate durch Filtration unter Überdruck in einer Membranfilterpresse abtrennt, dadurch gekennzeichnet, daß der bei der Abtrennung gebildete Filterkuchen einer Waschbehandlung unterzogen wird, wobei als Waschflüssigkeit eine 30-35 Gew. % $H_2SO_4$ enthaltende Schwefelsäurelösung eingesetzt wird, und eine spezielle Vorrichtung zur Durchführung dieses Verfahrens.

Das Waschen mit einer 30-35 Gew. % $H_2SO_4$ enthaltenden Schwefelsäurelösung bewirkt offenbar, daß die Auflösung von Eisensulfatmonohydrat aus dem Filtersalzkuchen und die Ausfällung des entsprechenden Heptahydrats aus der Waschlösung im Filterkuchen und Filtertuch weitgehend unterdrückt wird. Ein Festwerden des Filterkuchens beim Waschen kann daher nicht mehr beobachtet werden und Filtertuchverstopfungen treten ebensowenig auf wie beim Waschen nichteisenhaltiger Metallsulfate.

Es ist also ein weitgehend störungsfreies Abtrennen der Metallsulfate möglich. Damit wird die Reduzierung des Anteils freier Schwefelsäure im Filtersalz besonders in der großtechnischen Praxis erheblich erleichtert. Man kann nun auch bei einem hohen Anteil von Eisen(II)-sulfatmonohydrat im Filtersalz dessen Abtrennung mit den gegenüber Zentrifugen wartungsfreundlicheren Membranfilterpressen unter Betriebsbedingungen durchführen, die auch einen Dauerbetrieb ohne übermäßigen Verschleiß erlauben und gleichzei-

tig $H_2SO_4$ Restgehalte unter 10 Gew. % im Filtersalz erreichen.

Bei praktisch vollständiger Verdrängung der anhaftenden rekonzentrierten Schwefelsäurelösung aus dem Filtersalz durch die 30-35 %ige Waschschwefelsäurelösung sind sogar Werte von 8 Gew. % $H_2SO_4$ und weniger möglich.

Membranfilterpressen, wie sie beim erfindungsgemäßen Verfahren benutzt werden, bestehen im allgemeinen wie einfache Kammerfilterpressen aus mehreren Filterplatten, wobei jedoch benachbart zu einer üblichen Kammerfilterplatte jeweils eine Filterplatte vorhanden ist, an der eine aufblasbare Membran in der Art angebracht ist, daß sie - unter Druck gesetzt - gegen den Filterkuchen in der Filterkammer drückt und diesen gleichmäßig senkrecht zu seiner Oberfläche zusammenpreßt.

Mit diesen Filterpressen ist das Filtrieren von Suspensionen mit Feststoffgehalten bis zu etwa 50 Gew. % ohne Schwierigkeiten möglich, so daß Membranfilterpressen für alle in der Praxis vorkommenden Anwendungen des erfindungsgemäßen Verfahrens gut geeignet sind.

Ein besonderer Vorteil der Membranfilterpressen ist, daß sie ein schnelles und wirkungsvolles Waschen des Filterkuchens unter Einsatz geringer Mengen an Waschflüssigkeit erlauben. Die Pressen arbeiten diskontinuierlich, wobei ein Filtrationszyklus in der Regel aus folgenden Schritten besteht:

1) Füllen der Filterkammern mit Suspension und Aufbau eines Filterkuchens,
2) Auspressen des Filterkuchens,
3) Waschen des Filterkuchens,
4) Pressen des gewaschenen Filterkuchens,
5) Durchblasen des gewaschenen Filterkuchens mit Druckluft und
6) Austragen des abgetrennten Materials aus der Filterpresse.

Die "Filtration unter Überdruck" umfaßt die Schritte 1 und gegebenenfalls 2 .Beim erfindungsgemäßen Verfahren ist die gesamte genannte Schrittfolge für die Abtrennung des ausgefallenen Filtersalzes von der rekonzentrierten Schwefelsäure bevorzugt, jedoch brauchen die Schritte 2, 4 und 5 nicht unbedingt alle ausgeführt werden.

Durch Pressen des filtrierten Materials vor Beginn der Waschoperation kann der Filterkuchen kompaktiert und - insbesondere, falls er Brüche, Risse oder ähnliche strukturelle Fehler aufweist - in seinem Aufbau so homogenisiert werden, daß er über seine gesamte Fläche annähernd gleich große Poren und Kapillaren mit sehr ähnlichen Durchmessern aufweist. Dadurch setzt der Filterkuchen der Waschflüssigkeit bei der nachfolgenden Waschoperation an allen Stellen im wesentlichen den gleichen Widerstand entgegen, und es gibt keine "Kurzschlüsse" für die Waschflüssigkeit durch wenige große Öffnungen im Kuchen, durch die der Hauptteil der Waschflüssigkeit ohne Waschwirkung abfließt. Dies gilt unter sonst gleichen Bedingungen auch für die Filterkuchen aller aufeinanderfolgenden Filtrationen einer Charge, so daß alles filtrierte Material praktisch mit der gleichen Menge Waschflüssigkeit in Berührung kommt, und man ein gleichmäßig gut ausgewaschenes Filtersalz erhält. Das Pressen des Filterkuchens führt außerdem nebenbei zu einer Reduzierung des Feuchtegehaltes (bzw. Erhöhung des Feststoffgehaltes) des abfiltrierten Materials. Es wird daher im nachfolgenden Waschschritt auch weniger von der 30-35 %igen Schwefelsäure benötigt, um diese kleinere Menge der 40-85 %igen Schwefelsäurelösung aus dem Kuchen zu verdrängen. Dies bedeutet gleichzeitig eine zeitliche Verkürzung der Waschoperation. Bei Durchführung des erfindungsgemäßen Verfahrens darf das Auspressen des Filterkuchens vor der Waschoperation allerdings nicht mit zu hohem Druck erfolgen. Abgesehen davon, daß dadurch die Membranen auf Dauer zu stark belastet würden, kann nämlich ein zu hoher Pressdruck ein übermäßiges Kompaktieren und Entfeuchten des Filtersalzmaterials hervorrufen, mit der Folge, daß der Filterkuchen nicht mehr genügend durchlässig für die Waschflüssigkeit und ein Waschen daher nicht mehr möglich ist. Der Druck, mit dem die Membran gegen den Filterkuchen gepreßt wird, sollte daher im Regelfall unter 8 bar liegen und die Preßdauer höchstens 5 min. betragen. In vielen Fällen reicht schon ein kurzes, beispielsweise einminütiges Auspressen mit einem Druck von 5 bar zur Ausbildung einer geeigneten Struktur des Filtersalzkuchens aus. Die günstigsten Pressbedingungen sind selbstverständlich auch von der Zusammensetzung des abfiltrierten Materials, dessen mittlerer Teilchengröße und der Konzentration der auszupressenden Schwefelsäurelösung, die sehr stark deren Viskosität beeinflußt, abhängig und gegebenenfalls durch zwei, drei Orientierungsversuche für den Fachmann leicht festzulegen.

Die Waschung des Filterkuchens erfolgt mit einer wäßrigen 30-35 Gew. % $H_2SO_4$ enthaltenden Schwefelsäurelösung als Waschflüssigkeit. Schwefelsäurelösungen mit mehr als 35 Gew. % $H_2SO_4$ sind an sich auch brauchbar, da sie bei der Waschoperation gegenüber dem Filterkuchen das gleiche Verhalten zeigen wie die 30-35 %igen Lösungen. Ihr Auswascheffekt ist jedoch - besonders beim Auswaschen niedrigkonzentrierter Schwefelsäurelösungen aus dem Filterkuchen - nur gering.

Die Waschflüssigkeit kann auch Metallsulfate, z. B. Eisen(II)-, Aluminium-, Magnesium- und andere, in geringen Mengen beispielsweise auch Chrom- oder Vanadiumsulfat enthalten.

4

Die Zufuhr der Waschflüssigkeit zum Filterkuchen in der Presse kann auf zweierlei Art erfolgen, nämlich durch den Trübekanal der Membranfilterpresse, d. h. den Kanal, durch den zuvor die zu filtrierende Suspension in die Filterkammern geleitet wurde, als auch durch den sogenannten Waschkanal. Der Waschkanal (der während anderer Schritte des Filtrationszyklus auch andere Aufgaben haben kann) führt dabei nur den mit Membranen ausgestatteten Filterplatten Waschflüssigkeit zu. Sie wird zwischen die gegebenenfalls angepreßte Membran und den Filterkuchen auf der gesamten Fläche des Kuchens aufgebracht. Das Waschfiltrat wird von der gegenüberliegenden Seite des Filterkuchens über das Filtertuch abgeführt. Die Waschung über den Waschkanal ist bevorzugt, weil sie zu einem besonders gleichmäßigen Kontakt des Filterkuchenmaterials mit der Waschflüssigkeit führt.

In dem Maße, in dem die 30-35 %ige Waschschwefelsäure in den Kuchen aus Metallsulfaten eindringt, wird die 40-85 %ige Schwefelsäurelösung, die die Hohlräume des Filterkuchens vor der Waschoperation füllt, langsam aus dem Kuchen verdrängt. Als Waschfiltrat erhält man daher zunächst dieselbe 40-85 %ige Schwefelsäurelösung, die auch das Filtrat während der Teilschritte der Abtrennung des Filtersalzes aus der Suspension bildete, die zeitlich vor der Waschung lagen. Man wird diese Filtrate vorzugsweise vereinigen.

Während der Verdrängung der konzentrierten Säure vermischen sich die beiden unterschiedlich konzentrierten Schwefelsäurlösungen allerdings an ihrer Berührungsfläche etwas, so daß sich eine mehr oder weniger breite Schicht bildet, in der der Schwefelsäuregehalt vom Wert der konzentrierten Lösung auf den der Waschlösung abfällt. Tritt die Schwefelsäurelösung dieser Schicht aus dem Filterkuchen aus, so fällt der Schwefelsäuregehalt des Filtrats relativ schnell ab, so daß es vielfach sinnvoll ist, das ab einem gewissen Punkt erhaltene Filtrat nicht mehr mit den zu Anfang gewonnenen zusammenzuführen. Der Schnitt wird vorzugsweise dann gesetzt, wenn der Schwefelsäuregehalt des Filtrates noch nicht um mehr als 5 Gew. %, am besten um weniger als 1 Gew. % unter dem ursprünglichen Wert liegt. Den gewünschten Punkt kann man durch laufende, gegebenenfalls automatische Messungen der Schwefelsäurekonzentration im Filtrat bestimmen. In Routinefällen mit gleichbleibenden Verfahrensparametern kann man auch die Zeitspannen von Beginn der Waschoperation bis zum Erreichen des geeigneten Punktes einmal messen und dann das Waschfiltrat jeweils nach Verlauf dieser Zeitspanne vom Suspensionsfiltrat trennen.

Der gewaschene Filterkuchen kann gegebenenfalls noch gepreßt und/oder mit Druckluft durchblasen werden, um seinen Feuchtegehalt zu reduzieren. In den Hohlräumen des gewaschenen Filtersalzkuchens befindet sich eine wesentlich verdünntere Schwefelsäurelösung, als sich in dem Filterkuchen befand, der bei der Filtration erhalten wurde. Wäscht man lange genug aus, enthält der Filterkuchen sogar nur noch die Waschlösung mit 30-35 Gew. % $H_2SO_4$-Gehalt. Da die Viskosität von Schwefelsäurelösungen mit fallender Konzentration stark abnimmt, läßt sich die verdünntere Schwefelsäurelösung aus dem gewaschenen Filterkuchen wesentlich leichter mit Druckluft ausblasen als die relativ konzentrierte, die dem bei der Filtration gebildeten Kuchen anhaftet. Dieses sogenannte "Trockenblasen", das zur Entfeuchtung des Filterkuchens dient, führt daher beim gewaschenen Filterkuchen in gleicher Zeit zu einer stärkeren Entfeuchtung oder zu einem höheren Feststoffgehalt, als wenn der Filterkuchen so, wie er bei der Filtration gebildet wurde, trockengeblasen würde. Man erhält beispielsweise Filtersalz mit ca. 29 % Restfeuchte (Feststoffgehalt 71 %), wenn man den aus einer erfindungsgemäß erhaltenen Metallsulfat-Schwefelsäure-Suspension mit 66,5 Gew. % $H_2SO_4$-Gehalt abfiltrierten Kuchen 10 min mit 5 bar Druckluft durchbläst, und Filtersalz mit nur 22 % Restfeuchte (78 % Feststoffgehalt), wenn man den gleichen Filterkuchen zuvor mit einer 33 Gew. %igen Schwefelsäurelösung so intensiv wäscht, daß die Schwefelsäure in seinen Hohlräumen im Durchschnitt nur mehr ca. 50 Gew. % $H_2SO_4$-Gehalt aufweist und den gewaschenen Filterkuchen unter den gleichen Bedingungen mit Druckluft durchbläst. Das Trockenblasen des gewaschenen Filterkuchens wird vorzugsweise mit Druckluft von 3 bis 6 bar während 10 bis 15 min durchgeführt. Der Restgehalt der abgetrennten Metallsulfate an freiem $H_2SO_4$ soll danach bevorzugt zumindest unter 10 Gew. % liegen.

Bei einer besonders günstigen Ausführungsform des erfindungsgemäßen Verfahrens erfolgt die Konzentrierung der verdünnten Schwefelsäurelösung in mehreren Schritten. Die Konzentrierung ist dabei so ausgelegt, daß in einem der Konzentrierungsschritte die Schwefelsäurelösung bis zu einem $H_2SO_4$-Gehalt von 30-35 Gew. % konzentriert wird. Ein Teil dieser 30-35 Gew. %igen Schwefelsäurelösung wird ausgeschleust und als Waschflüssigkeit eingesetzt.

Dabei kann zweckmäßig so vorgegangen werden, daß man die verdünnte Schwefelsäurelösung in einem ersten Schritt durch Eindampfen bis auf einen Gehalt von 26-29 Gew. % $H_2SO_4$ konzentriert und danach auf eine Temperatur von 10-25 °C abkühlt. Aufgrund dieser Abkühlung fällt ein Teil der in der Schwefelsäure gelösten Metallsulfate in kristallwasserreicher Form aus (z. B. $FeSO_4 \cdot 7H_2O$, $MgSO_4 \cdot 7H_2O$). Der hohe Kristallwassergehalt dieser ausgefallenen Metallsulfatmodifikationen bewirkt eine weitere Konzentrierung der 26-29 %igen Schwefelsäurelösung auf einen Gehalt von 30-35 Gew. % $H_2SO_4$. Nach Abtrennung des Niederschlags wird diese Schwefelsäurelösung erfindungsgemäß als Waschflüssigkeit eingesetzt.

Eine spezielle Ausgestaltung des erfindungsgemäßen Verfahrens sieht vor, daß das von Beginn der Waschbehandlung an erhaltene Filtrat mit dem Filtrat, das man während der Filtration der Metallsulfat-Schwefelsäure-Suspension erhalten hat, vereinigt wird, solange sich die $H_2SO_4$ Gehalte beider Filtrate noch nicht allzu stark z. B. um weniger als 5 Gew. % unterscheiden. Der Rest des erstgenannten Filtrats, dessen Schwefelsäuregehalt ja zumindest dem der Waschflüssigkeit entspricht wird bei dieser Verfahrensvariante - am besten insgesamt - zur Konzentrierungsstufe zurückgeführt.

Das erfindungsgemäße Verfahren eignet sich insbesondere zur Aufarbeitung von Dünnsäure aus der Titandioxidherstellung nach dem Sulfatverfahren, speziell aus Ilmenit, wobei die Dünnsäure bis zu einem Gehalt von 50 bis 75 Gew. % $H_2SO_4$, bezogen auf den Flüssiganteil, konzentriert wird. Insbesondere erweist sich in diesem speziellen Fall eine Kombination der in den Ansprüchen 9, 10, 11 und 12 enthaltenen Verfahrensmaßnahmen als besonders günstig.

Die erhaltene rekonzentrierte Schwefelsäurelösung kann günstig wieder beim Aufschluß von titanhaltigen Rohstoffen im Sulfatverfahren verwendet werden. Will man auf diese Weise aus dem aufgeschlossenen Material Titandioxid-Pigment besonders guter Qualität herstellen, muß man den Anteil von für die Pigmenteigenschaften schädlichen Metallionen, z. B. von Chrom und insbesondere von Vanadin im Aufschlußgemisch möglichst gering halten. Eine genügende Menge der schädlichen Metallionen, die ursprünglich von Verunreinigungen des titanhaltigen Rohstoffes herrühren, werden im Sulfatverfahren normalerweise über die Dünnsäure und in einem darauffolgenden Dünnsäurekonzentrierungsverfahren über das Filtersalz als Sulfate ausgeschleust. Man muß daher darauf achten, daß insbesondere bei ständiger Konzentrierung der bei der $TiO_2$-Pigmentherstellung anfallenden Dünnsäure und Rückführung der erfindungsgemäß erhaltenen rekonzentrierten Schwefelsäure in den Aufschluß die Menge der schädlichen Metallsulfate, die im Gesamtprozeß ausgeschleust wird, groß genug ist, und sich die Sulfate nicht in der im Kreis geführten Schwefelsäure anreichern. Führt man daher beim erfindungsgemäßen Verfahren den größten Teil oder das gesamte verdünnte Waschfiltrat in die Konzentrierungsstufe zurück, darf die Waschung des Filtersalzes nur so intensiv sein, daß von den störenden Metallsulfaten aus dem Filtersalz nur so viel ins Waschfiltrat gelöst wird, daß die Konzentration dieser Metallionen bei der Titandioxidhydratfällung noch nicht stört. Unter Umständen muß man die Menge Waschflüssigkeit bzw. die Dauer der Waschbehandlung reduzieren und dafür einen etwas größeren Verlust durch nicht aus dem Filtersalz ausgewaschene Schwefelsäure hinnehmen. Man erhält dafür allerdings auch eine etwas bessere Kapazität der Anlage und es sei darauf hingewiesen, daß die Tendenz der erfindungsgemäß als Waschflüssigkeit eingesetzten, auf einen $H_2SO_4$-Gehalt von 30-35 Gew. % vorkonzentrierten Schwefelsäurelösung, Metallsulfate aus dem Filterkuchen zu lösen, aufgrund der höheren Sulfatkonzentration geringer ist als die der gemäß dem Stand der Technik bisher verwendeten Waschsäuren bzw. unbehandelten Dünnsäuren.

Das erfindungsgemäß abgetrennte Filtersalz eignet sich aufgrund seines niedrigen Anteils an freier $H_2SO_4$ verbunden mit einem niedrigen Restfeuchtegehalt besonders zur $SO_2$-Gewinnung durch thermische Spaltung.

Eine besonders günstig ausgestaltete Vorrichtung zur Durchführung des erfindungsgemäßen Verfahrens enthält

a) eine erste Gruppe von Bauelementen zur Konzentrierung der verdünnten Schwefelsäurelösung bis zu einem $H_2SO_4$-Gehalt von 30-35 Gew. %,
b) eine zweite Gruppe von Bauelementen zur weiteren Konzentrierung dieser vorkonzentrierten Lösung zur Bildung einer Metallsulfat-Schwefelsäure-Suspension mit einem $H_2SO_4$-Gehalt von 40-85 Gew. %, bezogen auf den Flüssiganteil,
c) mindestens eine Membranfilterpresse und
d) Mittel zum Ausbringen des filtrierten Feststoffs und des Filtrats aus der (den) Membranfilterpresse(n).

Die erste Gruppe von Bauelementen ist bei dieser Vorrichtung ausgangsseitig über Leitungsmittel für die 30-35 %ige Schwefelsäurelösung mit der Eingangsseite der zweiten Gruppe von Bauelementen und diese ausgangsseitig über Leitungsmittel für die Metallsulfat-Schwefelsäure-Suspension mit der Eingangsseite der Membranfilterpresse(n) verbunden.

Das diese Vorrichtung erfindungsgemäß Kennzeichnende ist, daß außerdem Leitungsmittel für die 30-35 %ige Schwefelsäurelösung vorgesehen sind, durch die die erste Gruppe von Bauelementen ausgangsseitig unter Umgehung der zweiten Bauelementegruppe direkt mit dem Eingang des Trübekanals und/oder Waschkanals der Membranfilterpresse(n) verbindbar ist, und die Membranfilterpresse(n) ausgangsseitig über zusätzliche Leitungsmittel für die Rückführung von Filtrat mit der Eingangsseite der zweiten Bauelementegruppe verbindbar ist (sind).

Mit dieser Vorrichtung kann während des Waschschrittes des erfindungsgemäßen Verfahrens auf besonders einfache Weise die geeignete Waschflüssigkeit zur Verfügung gestellt werden. Wenn im Verlauf der erfindungsgemäßen Filtersalzabtrennung während oder nach der Waschung der $H_2SO_4$-Gehalt des

Filtrates aus der Membranfilterpresse auf unakzeptabel niedrige Werte sinkt, kann das Filtrat, dessen $H_2SO_4$-Gehalt höher ist als 30-35 Gew.% anstatt der entnommenen Waschflüssigkeit der zweiten Konzentrierungsstufe zugeführt werden.

Die beiden Gruppen von Bauelementen des Konzentrierungsteils der Vorrichtung können in jeder dem Fachmann geeignet erscheinenden Weise aufgebaut sein.

Die erste Baugruppe kann beispielsweise aus einem oder mehreren Waschtürmen z. B. Venturiwäschern bestehen, in denen die Ausgangslösung mit Hilfe heißer Abgase vorkonzentriert wird. In vielen Fällen zweckmäßig ist eine dem Wäscher nachgeschaltete Kühlkristallisationsanlage und ein Filter zur Abtrennung von kristallwasserreichen Metallsulfaten, insbesondere $FeSO_4 \cdot 7H_2O$, da deren Abtrennung eine billige Weiterkonzentrierung der Schwefelsäurelösung auf die gewünschten 30-35 Gew. % $H_2SO_4$ ermöglicht. Eine weitere spezielle Ausführungsform der ersten Baugruppe ist der deutschen Patentanmeldung P 37 36 111.2 der Anmelderin zu entnehmen, auf deren Offenbarung hiermit Bezug genommmen wird. Die zweite Bauelementegruppe, in der die vorkonzentrierte 30-35 %ige Schwefelsäurelösung unter Bildung einer Suspension aus Metallsulfaten und Schwefelsäurelösung mit einem $H_2SO_4$-Gehalt von 40-85 Gew. % weiter konzentriert wird, kann aus einem beispielsweise mehrstufigen Vakuumumlaufverdampfer bestehen. Dieser kann noch von einem Kühler oder Wärmetauscher, der die Wiedergewinnung der Abwärme gestattet, und/oder einer Rührkesselkaskade gefolgt sein, in der die ausgefallenen Metallsulfatkristalle so "reifen" können, daß der für die Abtrennung in der Membranfilterpresse günstigste Korngrößenbereich eingestellt werden kann.

Unter "Leitungsmittel" sollen die dem Fachmann geeignet erscheinenden Mittel zur Förderung von Schwefelsäurelösungen bzw. -suspensionen des jeweils angegebenen $H_2SO_4$-Gehalteszwischen den angegebenen Teilen der Vorrichtung verstanden werden. Sie umfassen beispielsweise Rohre und Pumpen.

Gegebenenfalls muß auch eine Apparatur zur Entfernung von Schwefelsäuredämpfen aus der Abluft beim Trockenblasen des Filterkuchens in der Membranfilterpresse vorgesehen werden.

Beispiele

Beispiel 1

Eine Dünnsäure, die bei der Titandioxidherstellung aus Ilmenit nach dem Sulfatverfahren erhalten wurde, wurde nach dem erfindungsgemäßen Verfahren aufgearbeitet. Sie hatte folgende Zusammensetzung:

| Bestandteil | Gehalt (Gew. %) |
|---|---|
| $FeSO_4$ | 11,00 |
| $MgSO_4$ | 2,33 |
| $TiOSO_4$ | 0,87 |
| $Al_2(SO_4)_3$ | 0,25 |
| $MnSO_4$ | 0,19 |
| $VOSO_4$ | 0,13 |
| $CaSO_4$ | 0,10 |
| $Cr_2(SO_4)_3$ | 0,08 |
| $H_2SO_4$ | 22,90 |
| $H_2O$/Spurenelemente | Rest |

Die Suspension aus Schwefelsäurelösung und ausgefallenen Metallsulfaten wies einen $H_2SO_4$-Gehalt von 66,5 Gew. % auf, bezogen auf den Flüssiganteil. Der Korndurchmesser der Salze lag im wesentlichen zwischen 10-30 $\mu$m (mikroskopisch bestimmt).

a) (Vergleich) 5 kg der ca. 50 °C heißen Suspension wurden über eine Membranfilterpresse mit einer Kammer und einer Filterfläche von 220 x 220 mm filtriert, wobei Suspension mit einem Druck von 5 bar in die Filterkammer gefördert wurde. Nach 30 sec. wurde der Filterkuchen ca. eine Minute lang gepreßt, wobei ein Druck von ebenfalls 5 bar verwendet wurde. Die Kuchendicke betrug 20 mm, der Restfeuchtegehalt 40.7 Gew. % (entsprechend nur 59,3 Gew. % Feststoffgehalt). Der Gehalt des Filterkuchens an freier $H_2SO_4$ betrug 27,1 %.

b) (Vergleich) Es wurde wie unter a) vorgegangen, der Filterkuchen wurde jedoch nach dem Pressen noch 10 Minuten lang mit Druckluft von 5 bar trockengeblasen. Die Restfeuchte des filtrierten Materials betrug 28,9 Gew. % (71,1 Gew. % Feststoffgehalt). Der $H_2SO_4$-Gehalt im Kuchen wurde analytisch zu 19,6 % bestimmt. Infolge der unterschiedlichen Partialdampfdrucke von Wasser und $H_2SO_4$ war die

7

Konzentration der im Kuchen haften gebliebenen Schwefelsäurelösung während des Ausblases auf 67,8 Gew. % angestiegen.

c) Es wurde wie unter a) vorgegangen, jedoch wurde der Filterkuchen nach der Filtration mit 0,25 l auf einen $H_2SO_4$-Gehalt von 33 Gew. % vorkonzentrierter Dünnsäure von 20 °C gewaschen. Anschließend wurde der gewaschene Filterkuchen wiederum 10 min mit 5 bar Druckluft trockengeblasen. Der Feuchtegehalt des Kuchens betrug 24,6 Gew. % (75,4 Gew. % Feststoffgehalt) Der Rest-$H_2SO_4$-Gehalt betrug 14,6 Gew. %.

d) Die Verfahrensweise glich der unter c) beschriebenen. Es wurden jedoch 0,5 l der 33 %igen Schwefelsäurelösung zum Waschen des Filterkuchens verwandt. Die Restfeuchte des Kuchens betrug 23,3 Gew. % (76,7 Gew. % Feststoffgehalt) Die analytische Bestimmung des $H_2SO_4$-Gehaltes im Kuchen ergab 13,2 Gew. %.

e) Die Versuchsparameter waren dieselben wie in Beispiel 1c. Das filtrierte Material wurde jedoch mit 1,5 l der gleichen Waschflüssigkeit behandelt. Die Kuchenrestfeuchte betrug 21,9 Gew. % (78,1 Gew. % Feststoffgehalt) bei 10 Gew. % $H_2SO_4$-Gehalt. Dies entspricht einer Konzentration der Schwefelsäurelösung im Kuchen von 45,7 Gew. %.

Beispiel 2

Es wurde wie in Beispiel 1 gearbeitet. Die beim Konzentrieren der Dünnsäure erhaltene Suspension wurde jedoch vor der Abtrennung der Metallsulfate kurzzeitig reifen lassen, so daß ihre Teilchengröße geringfügig größer war als in Beispiel 1.

a) (Vergleich) Die Versuchsparameter entsprachen denen von Beispiel 1b. Der Restfeuchtegehalt der abgetrennten Metallsulfate betrug nun 23,5 Gew. % (76,5 Gew. % Feststoff). Die analytische Bestimmung des Restgehaltes an freier $H_2SO_4$ ergab 15,6 Gew. % (entsprechend einer Konzentration der dem Material anhaftenden Schwefelsäure von 66,6 Gew. %).

b) Versuchsbedingungen wie unter 2a, aber es wurde mit 1 auf einen Gehalt von 33 Gew. % $H_2SO_4$ vorkonzentrierter Dünnsäure gewaschen. Es ergab sich ein Filtersalzmaterial mit 19,6 Gew. % Restfeuchte und einem $H_2SO_4$-Gehalt von 8,8 Gew. %.

Beispiel 3

Diesmal lag die Korngröße der aus der Suspension abzutrennenden Metallsulfate im wesentlichen zwischen 15 $\mu$m und 70 $\mu$m. Der $H_2SO_4$-Gehalt der Suspension betrug 65,2 Gew. %, bezogen auf den Flüssiganteil.

a) (Vergleich) Die übrigen Versuchsbedingungen waren die gleichen wie in Beispiel 1b. Die abgetrennten Metallsulfate wiesen eine Restfeuchte von 19,8 Gew. % auf. Ihr Gehalt an anhaftender freier $H_2SO_4$ betrug 13 Gew. %, die Konzentration der "Haftschwefelsäure" demnach 65,7 Gew. %.

b) In Abänderung zu Versuch a) wurde der bei der Filtration gebildete Kuchen zunächst mit 0,75 l der vorkonzentrierten 33 %igen Dünnsäure gewaschen. Die Restfeuchte im Kuchen betrug 17 Gew. % bei einem $H_2SO_4$-Gehalt von 8,3 Gew. %.

c) Waschen mit 1 l vorkonzentrierter Dünnsäure unter sonst gleichen Bedingungen wie in Beispiel 3b führt zu einem Filtersalzmaterial von 17 Gew. % Restfeuchte und 8,0 Gew. % Gehalt an freiem $H_2SO_4$.

Beispiel 4

In einem produktionsnahem Versuch wurde Eisen(II)-sulfat enthaltende Dünnsäure, erhalten bei der Titandioxidpigmentherstellung aus Ilmenit, zunächst in mehreren Schritten bis zu einem $H_2SO_4$-Gehalt von 32-33 Gew. % vorkonzentriert und von festen Bestandteilen getrennt. Ein kleiner Teil dieser vorkonzentrierten Dünnsäure wurde als Waschflüssigkeit eingesetzt, der überwiegende Teil wurde jedoch weiterkonzentriert, bis der $H_2SO_4$-Gehalt der entstehenden Suspension aus Schwefelsäurelösung und Metallsulfaten (vorwiegend Eisen(II)-sulfatmomohydrat) 68 bis 70 Gew. %, bezogen auf den Flüssiganteil, betrug.

Diese Metallsulfate wurden mit Hilfe einer Membranfilterpresse abgetrennt. Die Filterpresse hatte zwei Kammern mit jeweils 50 mm Tiefe und eine Gesamtfilterfläche von 4,5 m$^2$, die Membranen waren aus Gummi.

Tabelle 1 gibt eine Übersicht über die Versuche. In den Versuchen 4a bis 4f wurde erfindungsgemäß gewaschen, wobei die Waschflüssigkeit in den Versuchen 4a bis 4c sowohl über den Trübe- als auch über dem Waschkanal zugeführt wurde, während in den Versuchen 4d bis 4f nur über den Waschkanal gewaschen wurde. In den Versuchen 4g bis 4i wurde das Filtersalz zum Vergleich nicht gewaschen.

Bei keinem der Versuche mit Filtersalzwaschung konnte ein Festwerden des Filterkuchens oder ein Verstopfen des Filtertuchs aufgrund der Waschung festgestellt werden.

Wie sich aus Zeile 15, Tabelle 1 ergibt, konnte dagegen der $H_2SO_4$-Gehalt des Filtersalzes ohne Schwierigkeiten um über 50 % gesenkt werden. Der Vanadingehalt des Filtersalzes kann dabei in derselben Größenordnung gehalten werden, in der er ohne Filtersalzwaschung liegt (s. insbesondere die Versuche 4d bis 4i, Sp. 17), so daß keine stärkere Anreicherung schädlicher Metallionen in der rekonzentrierten Schwefelsäure aufgrund einer Rückführung des Waschfiltrates in die Konzentrationsstufe befürchtet werden muß.

Falls nichts anderes angegeben, bedeuten %-Angaben in den vorliegenden Unterlagen Gewichtsprozent (Gew. %).

EP 0 362 428 B1

Tabelle 1

| | a | b | c | d | e | f | g | h | i |
|---|---|---|---|---|---|---|---|---|---|
| **eingesetzte Filtersalz-suspension** | | | | | | | | | |
| 1 $H_2SO_4$- Gehalt (Gew.%) | 69,0 | 69,7 | 68,4 | 69,5 | 69,5 | 69,3 | 69,5 | 69,5 | 69,5 |
| 2 Feststoffgehalt (Gew. %) | 26,0 | 26,0 | 26,3 | 27,1 | 27,1 | 27,2 | 27,9 | 27,9 | 27,9 |
| **Filtration** | | | | | | | | | |
| 3 Filtrationsdauer (min)/ -druck (bar) | 3,5 2,5 | 3,0 2,2 | 4,0 2,4 | 1,5 2,0 | 2,0 2,4 | 2,0 2,4 | 3,0 2,0 | 1,5 2,0 | 1,3 2,0 |
| 4 Abpressdauer(min)/ -druck (bar) | 3,0 4,0 | 2,0 4,0 | 3,0 4,0 | 1,5 4,0 | 2,0 4,0 | 3,0 4,0 | - - | - - | - - |
| **Waschvorgang** analytische Daten der Waschsäurelösung | | | | | | | | | |
| 5. $H_2SO_4$-Gehalt (Gew. %) | 32,8 | 33,0 | 33,1 | 32,6 | 32,6 | 32,1 | | | |
| 6. Fe-Geh.     " | 3,3 | 3,2 | 3,4 | 2,5 | 2,5 | 3,1 | | | |
| 7. Al-Geh.     " | 0,064 | 0,069 | 0,069 | 0,069 | 0,069 | 0,070 | | | |
| 8. Cr-Geh.     " | 0,031 | 0,033 | 0,034 | 0,044 | 0,044 | 0,034 | | ohne Waschen | |
| 9. V-Geh.     " | 0,066 | 0,074 | 0,074 | 0,076 | 0,076 | 0,075 | | | |
| 10. Dauer (min)/ -druck (bar) | 15,0 2,0-3,2 | 8,0 2,2-3,2 | 9,0 2,4-3,5 | 4,0 3,2 | 4,5 3,2 | 4,0 3,4 | | | |
| 11. Waschflüssigk.-verbr.(kg) | 109,0 | 91,0 | 77,0 | 39,0 | 38,0 | 25,0 | | | |

2

| | a | b | c | d | e | f | g | h | i |
|---|---|---|---|---|---|---|---|---|---|
| **12.** **Nachpressen** | | | | | | | | | |
| Dauer (min) | 5,0 | 3,0 | 3,0 | 3,0 | 3,5 | 3,0 | 3,0 | 2,5 | 2,7 |
| Druck (bar) | 6,0 | 6,0 | 6,0 | 6,0 | 7,0 | 7,0 | 8,0 | 8,0 | 8,0 |
| **Trockenblasen** | | | | | | | | | |
| **13.** Dauer (min) | 10,0 | 15,0 | 15,0 | 15,0 | 15,0 | 15,0 | 15,0 | 15,0 | 15,0 |
| Druck (bar) | 4,0 | 4,0 | 5,0 | 5,0-4,5 | 4,0 | 4,0 | 6,0 | 6,0 | 6,0 |
| **Produkte** **Filtersalz** | | | | | | | | | |
| **14.** Kuchendicke (mm)/ -gewicht (kg) | 35,0 126,0 | 38,0 140,0 | 41,0 149,0 | 26,0 92,0 | 28,0 101,0 | 29,0 104,0 | 37,0 134,0 | 32,0 115,0 | 29,0 105,0 |
| **15.** $H_2SO_4$-Gehalt (Gew.%) | 9,4 | 10,2 | 9,4 | 9,5 | 9,3 | 10,4 | 23,3 | 23,6 | 23,0 |
| **16.** Restfeuchte/ Feststoffgeh. (Gew. %) | 24,2 75,8 | 23,9 76,1 | 23,2 76,8 | 21,5 78,5 | 21,3 78,7 | 21,6 78,4 | 32,3 67,7 | 32,5 67,5 | 31,6 68,4 |
| **17.** V-Geh. (Gew. %) | 0,17 | 0,21 | 0,23 | 0,29 | 0,28 | 0,31 | 0,25 | 0,27 | 0,26 |
| **rekonzentrierte** **Schwefelsäurelösung** | | | | | | | | | |
| **18.** $H_2SO_4$-Gehalt (Gew. %) | 69,3 | 68,5 | 68,5 | 68,8 | 68,8 | 68,1 | 68,9 | 68,9 | 68,9 |
| **19.** V-Gehalt (Gew. %) | 0,028 | 0,033 | 0,038 | 0,027 | 0,027 | 0,035 | 0,034 | 0,034 | 0,034 |

**Patentansprüche**

1. Verfahren zur Aufarbeitung einer verdünnten Schwefelsäurelösung, die - in Lösung - Eisen(II)-sulfat oder ein Gemisch von Metallsulfaten enthält, das vorwiegend aus Eisen(II)-sulfat besteht,

wobei man die Schwefelsäurelösung unter Bildung einer Metallsulfat-Schwefelsäure-Suspension bis zu einem Gehalt von 40-85 Gew. % $H_2SO_4$, bezogen auf den Flüssiganteil, konzentriert, und

danach die in der Suspension vorhandenen ausgefallenen Metallsulfate durch Filtration unter Überdruck in einer Membranfilterpresse abtrennt,

dadurch gekennzeichnet,

daß der bei der Abtrennung gebildete Filterkuchen einer Waschbehandlung unterzogen wird, wobei als Waschflüssigkeit eine 30-35 Gew. % $H_2SO_4$ enthaltende Schwefelsäurelösung eingesetzt wird.

**2.** Verfahren nach Anspruch 1,

dadurch gekennzeichnet,

daß die Filtration aus einem ersten Schritt besteht, in dem der Filterkuchen aufgebaut wird, und einem zweiten Schritt, in dem der Filterkuchen ausgepreßt wird.

**3.** Verfahren nach einem der Ansprüche 1 oder 2, dadurch gekennzeichnet,

daß der gewaschene Filterkuchen, gegebenenfalls nach Auspressen, mit Druckluft durchblasen wird.

**4.** Verfahren nach einem der Ansprüche 2 oder 3,

dadurch gekennzeichnet,

daß das Auspressen mit höchstens 8 bar Druck erfolgt.

**5.** Verfahren nach einem der Ansprüche 3 oder 4,

dadurch gekennzeichnet,

daß der Filterkuchen 10 bis 15 min. lang mit Druckluft von 3 bis 6 bar durchblasen wird.

**6.** Verfahren nach einem der Ansprüche 1 bis 5,

dadurch gekennzeichnet,

daß der Restgehalt der abgetrennten Metallsulfate an freiem $H_2SO_4$ weniger als 10 Gew. % beträgt.

**7.** Verfahren nach einem der Ansprüche 1 bis 6,

dadurch gekennzeichnet,

daß die als Waschflüssigkeit verwendete 30-35 Gew. % $H_2SO_4$ enthaltende Lösung Metallsulfate, insbesondere Eisen(II)-sulfat, gelöst enthält.

**8.** Verfahren nach Anspruch 7,

dadurch gekennzeichnet,

daß die Konzentrierung der verdünnten Schwefelsäurelösung auf einen $H_2SO_4$-Gehalt von 40-85 Gew. %, bezogen auf den Flüssiganteil, in mehreren Schritten erfolgt, wobei in einem der Schritte die Lösung bis zu einem Gehalt von 30-35 Gew. % $H_2SO_4$ konzentriert wird,

und ein Teil dieser Lösung als Waschflüssigkeit eingesetzt wird.

**9.** Verfahren nach Anspruch 8,

dadurch gekennzeichnet,

daß die verdünnte Schwefelsäurelösung in einem ersten Schritt durch Eindampfen bis zu einem Gehalt von 26-29 Gew. % $H_2SO_4$ konzentriert wird, danach auf eine Temperatur von 10 bis 25 °C abgekühlt und von ausgefallenen kristallwasserreichen Metallsulfaten, insbesondere $FeSO_4 \cdot 7H_2O$ getrennt wird, und diese nunmehr 30-35 Gew. %ige Schwefelsäurelösung als Waschflüssigkeit eingesetzt wird.

**10.** Verfahren nach einem der Ansprüche 1 bis 9,

dadurch gekennzeichnet,

daß das von Beginn der Waschbehandlung an erhaltene Filtrat zunächst mit dem während der Filtration erhaltenen Filtrat vereinigt und der Rest zumindest teilweise zur Konzentrierungsstufe zurückgeführt wird.

**11.** Verfahren nach Anspruch 10,

dadurch gekennzeichnet,

daß das von Beginn der Waschbehandlung an erhaltene Filtrat solange mit dem während der Filtration erhaltenen vereinigt wird, bis sein $H_2SO_4$-Gehalt um höchstens 5 Gew. % unter dem des während der Filtration erhaltenen Filtrates liegt, und der Rest des Waschfiltrates wieder zur Konzentrierungsstufe

EP 0 362 428 B1

zurückgeführt wird.

**12.** Verfahren nach einem der Ansprüche 1 bis 11,
dadurch gekennzeichnet,
daß die dem Verfahren unterworfene verdünnte Schwefelsäurelösung Dünnsäure aus der Titandioxidherstellung ist und auf einen Gehalt von 50 bis 75 Gew. % $H_2SO_4$, bezogen auf den Flüssiganteil,
konzentriert wird.

**13.** Vorrichtung zur Aufarbeitung einer verdünnten Schwefelsäurelösung, die - in Lösung - Eisen(II)-sulfat
oder ein Gemisch von Metallsulfaten enthält, das vorwiegend aus Eisen(II)-sulfat besteht,
enthaltend
a) eine erste Gruppe von Bauelementen zur Konzentrierung der verdünnten Schwefelsäurelösung
bis zu einem $H_2SO_4$-Gehalt von 30-35 Gew. %,
b) eine zweite Gruppe von Bauelementen zur weiteren Konzentrierung dieser vorkonzentrierten
Lösung zur Bildung einer Metallsulfat-Schwefelsäure-Suspension mit einem $H_2SO_4$-Gehalt von 40-85
Gew. %, bezogen auf den Flüssiganteil,
c) mindestens eine Membranfilterpresse und
d) Mittel zum Ausbringen des filtrierten Feststoffs und des Filtrats aus der (den)
Membranfilterpresse(n) wobei die erste Bauelementegruppe ausgangsseitig über Leitungsmittel für
die 30-35 %ige Schwefelsäurelösung mit der Eingangsseite der zweiten Gruppe von Bauelementen
und diese wiederum ausgangsseitig über Leitungsmittel für die Metallsulfat-Schwefelsäure-Suspenion, mit der Eingangsseite der Membranfilterpresse(n) verbunden ist,
dadurch gekennzeichnet,
daß außerdem Leitungsmittel für die 30-35 %ige Schwefelsäurelösung vorgesehen sind, durch die
die erste Gruppe von Bauelementen ausgangsseitig unter Umgehung der zweiten Bauelementengruppe direkt mit dem Eingang des Trübekanals und/oder des Waschkanals der
Membranfilterpresse(n) verbindbar ist, und die Membranfilterpresse(n) ausgangsseitig über Leitungsmittel zur Rückführung von Filtrat mit der Eingangsseite der zweiten Bauelementegruppe verbindbar
ist (sind).

## Claims

**1.** A process for regenerating a dilute sulphuric acid solution that contains, in solution, iron(II) sulphate or a
mixture of metal sulphates that consists largely of iron(II) sulphate, in which the sulphuric acid solution
is concentrated with formation of a metal sulphate - sulphuric acid suspension to an $H_2SO_4$ content of
40-85 wt% relative to the liquid component, and
subsequently the precipitated metal sulphates present in the suspension are removed by filtration under
excess pressure in a membrane filter press,
characterized in that
the filter cake formed in the removal is subjected to a washing treatment in which a sulphuric acid
solution containing 30-35 wt% $H_2SO_4$ is used as wash liquid.

**2.** A process according to claim 1,
characterized in that the filtration consists of a first stage in which the filter cake is built up and a
second stage in which the filter cake is pressed out.

**3.** A process according to one of claims 1 or 2,
characterized in that
the washed filter cake, optionally after pressing out, is blown through with compressed air.

**4.** A process according to one of claims 2 or 3,
characterized in that
the pressing-out is carried out with a pressure of no more than 8 bar.

**5.** A process according to one of claims 3 or 4,
characterized in that
the filter cake is blown through for 10 to 15 min. with compressed air with a pressure of 3 to 6 bar.

13

6. A process according to one of claims 1 to 5,
characterized in that the residual content of free $H_2SO_4$ in the metal sulphates removed is less than 10 wt%.

7. A process according to one of claims 1 to 6,
characterized in that the solution containing 30-35 wt% $H_2SO_4$ used as wash liquid contains dissolved metal sulphates, especially iron(II) sulphate.

8. A process according to claim 7,
characterized in that the concentration of the dilute sulphuric acid solution takes place in several stages to an $H_2SO_4$ content of 40-85 wt%, relative to the liquid component, the solution being concentrated in one of the stages to an $H_2SO_4$ content of 30-35 wt%,
and a part of this solution being used as wash liquid.

9. A process according to claim 8
characterized in that
the dilute sulphuric acid solution is concentrated in a first stage by evaporation to an $H_2SO_4$ content of 26-29 wt%, subsequently cooled to a temperature of 10 to 25 ° C and separated from precipated metal sulphates rich in water of crystallization, especially $FeSO_4.7H_2O$, and this sulphuric acid solution, now 30-35 wt%, is used as wash liquid.

10. A process according to one of claims 1 to 9,
characterized in that the filtrate obtained from the start of the washing treatment onwards is first combined with the filtrate obtained during the filtration and the remainder is at least partly returned to the concentration stage.

11. A process according to claim 10,
characterized in that the filtrate obtained from the start of the washing treatment onwards is combined with that obtained during the filtration until its $H_2SO_4$ content is not more than 5 wt% below that of the filtrate obtained during the filtration, and the remainder of the wash filtrate is returned again to the concentration stage.

12. A process according to one of claims 1 to 11,
characterized in that the dilute sulphuric acid solution subjected to the process is dilute acid from titanium dioxide manufacture and is concentrated to an $H_2SO_4$ content of 50 to 75 wt%, relative to the liquid component.

13. An apparatus for regenerating a dilute sulphuric acid solution, that contains, in solution, iron(II) sulphate or a mixture of metal sulphates that consists largely of iron(II) sulphate,
containing
a) a first group of structural units for concentrating the dilute sulphuric acid solution to an $H_2SO_4$ content of 30-35 wt%,
b) a second group of structural units for the further concentration of this preconcentrated solution to form a metal sulphate - sulphuric acid suspension with an $H_2SO_4$ content of 40-85 wt%, relative to the liquid component,
c) at least one membrane filter press and
d) means for bringing the filtered solid and the filtrate out of the membrane filter press or presses, whereby the first group of structural units is connected on the outlet side via lines for the 30-35 % sulphuric acid solution with the inlet side of the second group of structural units and the latter group is connected in turn on the outlet side via lines for the metal sulphate - sulphuric acid suspension with the inlet side of the membrane filter press or presses,
characterized in that
lines are also provided for the 30-35 % sulphuric acid solution through which the first group of structural units can be directly connected on the outlet side, by-passing the second group of structural elements, with the inlet of the prefilt channel and/or the wash channel of the membrane filter press or presses and the membrane filter press or presses can be connected on the outlet side via lines for the return of filtrate with the inlet side of the second group of structural units.

14

EP 0 362 428 B1

**Revendications**

1. Procédé destiné au traitement d'une solution diluée d'acide sulfurique, qui contient en solution du sulfate de fer(II) ou un mélange de sulfates métalliques constitué essentiellement de sulfate de fer(II), dans lequel on concentre la solution d'acide sulfurique avec formation d'une suspension de sulfate métallique-acide sulfurique jusqu'à une teneur en $H_2SO_4$ de 40-85 % en poids par rapport à la partie liquide, puis, par filtration en surpression, on sépare dans un filtre-presse à membrane les sulfates métalliques précipités présents dans la suspension, caractérisé en ce que le gâteau de filtration formé lors de la séparation est soumis à un traitement de lavage, le liquide de lavage utilisé étant une solution d'acide sulfurique contenant 30-35 % en poids de $H_2SO_4$.

2. Procédé selon la revendication 1, caractérisé en ce que la filtration est constituée d'une première étape au cours de laquelle est réalisé le gâteau de filtration, et d'une deuxième étape dans laquelle le gâteau de filtration est exprimé.

3. Procédé selon l'une des revendications 1 ou 2, caractérisé en ce qu'un courant d'air comprimé est insufflé dans le gâteau de filtration lavé, éventuellement après exprimage

4. Procédé selon l'une des revendications 2 ou 3, caractérisé en ce que l'exprimage s'effectue sous une pression maximale de 8 bar.

5. Procédé selon l'une des revendications 3 ou 4, caractérisé en ce qu'on insuffle dans le gâteau de filtration de l'air comprimé sous 3-6 bar pendant 10-15 minutes.

6. Procédé selon l'une des revendications 1 à 5, caractérisé en ce que la teneur résiduelle des sulfates métalliques séparés en $H_2SO_4$ libre est inférieure à 10 % en poids.

7. Procédé selon l'une des revendications 1 à 6, caractérisé en ce que la solution contenant 30-35 % en poids de $H_2SO_4$ et utilisée comme liquide de lavage contient en solution des sulfates métalliques, en particulier du sulfate de fer(II).

8. Procédé selon la revendication 7, caractérisé en ce que la concentration de la solution diluée d'acide sulfurique jusqu'à une teneur en $H_2SO_4$ de 40-85 % en poids par rapport à la partie liquide s'effectue en plusieurs étapes, l'une des étapes consistant à concentrer la solution jusqu'à une teneur en $H_2SO_4$ de 30-35 % en poids, une partie de cette solution étant utilisée comme liquide de lavage.

9. Procédé selon la revendication 8, caractérisé en ce que la solution diluée d'acide sulfurique est au cours d'une première étape concentrée par évaporation jusqu'à une teneur en $H_2SO_4$ de 26-29 % en poids, puis est refroidie à une température de 10-25°C et est séparée des sulfates métalliques précipités, riches en eau de cristallisation, en particulier $FeSO_4.7H_2O$, cette solution d'acide sulfurique qui maintenant est à 30-35 % en poids étant utilisée comme liquide de lavage.

10. Procédé selon l'une des revendications 1 à 9, caractérisé en ce qu'on combine d'abord le filtrat obtenu depuis le début du traitement de lavage au filtrat obtenu pendant la filtration, le résidu étant au moins partiellement renvoyé à l'étage de concentration.

11. Procédé selon la revendication 10, caractérisé en ce qu'on combine le filtrat obtenu depuis le début du traitement de lavage au filtrat obtenu pendant la filtration, jusqu'à ce que sa teneur en $H_2SO_4$ soit d'au plus 5 % en poids inférieure à celle du filtrat obtenu pendant la filtration, le résidu du filtrat de lavage étant de nouveau renvoyé à l'étage de concentration.

12. Procédé selon l'une des revendications 1 à 11, caractérisé en ce que la solution diluée d'acide sulfurique soumise au procédé est l'acide dilué provenant de la fabrication du dioxyde de titane, et est concentrée jusqu'à une teneur en $H_2SO_4$ de 50 à 75 % en poids par rapport à la partie liquide.

13. Dispositif destiné au traitement d'une solution diluée d'acide sulfurique, qui contient en solution du sulfate de fer(II) ou un mélange de sulfates de métaux constitué essentiellement de sulfate de fer(II), et comprenant :

15

a) un premier groupe d'éléments de construction destinés à la concentration de la solution diluée d'acide sulfurique jusqu'à une teneur en $H_2SO_4$ de 30-35 % en poids,

b) un deuxième groupe d'éléments de construction, destiné à la poursuite de la concentration de cette solution préconcentrée, pour former une suspension sulfate métallique-acide sulfurique ayant par rapport à la partie liquide une teneur en $H_2SO_4$ de 40-85 % en poids,

c) au moins un filtre-presse à membrane, et

d) des organes destinés à extraire les matières solides filtrées et le filtrat du ou des filtres-presse à membrane, le premier groupe d'éléments de construction étant, côté sortie, raccordé par l'intermédiaire de conduites transportant la solution d'acide sulfurique à 30-35 % au côté entrée du deuxième groupe d'éléments de construction, ce deuxième étant pour sa part,côté sortie, raccordé par l'intermédiaire de conduites transportant la suspension sulfate métallique-acide sulfurique, au côté entrée du ou des filtres-presses à membrane, caractérisé en ce qu'on prévoit par ailleurs des conduites transportant la solution d'acide sulfurique à 30-35 %, par lesquelles le premier groupe d'éléments de construction, côté sortie, et en évitant le deuxième groupe d'éléments de construction, être directement raccordé à l'entrée de la gaine d'eau trouble et/ou de la gaine de lavage du ou des filtres-presses à membrane, le ou les filtres-presses à membrane pouvant, côté sortie, et par l'intermédiaire de conduites servant au retour du filtrat, être raccordés au côté entrée du deuxième groupe d'éléments de construction.